# EUROPEAN PATENT APPLICATION

(11) **EP 0 590 344 A2**
(43) Date of publication of application: **06.04.1994**
(21) Application number: 93114105.5
(22) Date of filing: 02.09.1993
(51) Int. Cl.: F16L 58/00

(54) **Method for treating the interior surface of a pipe or a tube**

(30) Priority: 28.09.1992 SE 9202793
(71) Applicant: Siemens Elema AB, S-171 95 Solna 1 (SE)
(72) Inventor: Hirschberg, Jakub, SE-183 44 Täby (SE); Fahlström, Ulf, SE-122 40 Enskede (SE)

(57) **Abstract**

In a method of treating the interior surface of a conduit or a flexible tube the conduit or tube wall is cut open such that its inner side (3) is exposed for surface treatment (4). After the surface treatment the conduit or tube wall is brought back to the original shape with the cut surfaces (18, 20) fixed close to each other. In the case of an elastic tube the tube (1) can, as an alternative, be brought on a core (28) whereupon the tube wall is turned inside out (7) on the core, such that the inner side of the tube wall is exposed for surface treatment. The tube wall is then turned back (8) such that the tube resumes its original shape after which the core is removed from the tube.

## Description

This invention relates to a method for treating the interior surface of a pipe or tube.

Friction between e.g. a polymer tube and mechanical parts inserted into it is often high as is, corcorrespondingly, kinetic friction, and attendant pressure losses in many applications are often disruptively large during the passage of fluids and gases through such tubes. This friction in the result of unfavorable surface structures, i.e. unfavorable roughness, or unfavorable surface chemistry.

In the use of such tubes in medicine, adhesion and deposits of the constituents of drugs and body fluids, such as proteins, minerals, platelets, lipids etc., on tube walls and the adhesion of microorganisms, as well as diffusion and interaction between the tube wall and the medium carried in the tube or mechanical items inserted into the interior lumen, can give rise to additional problems. Thus, the medium carried in the tube could e.g. leach out substances such as softeners from the tube, and substances in the transported drug could diffuse into the tube material. In addition, substances such as silver could exert a catalytic action on polyurethane and cause cracks in the polyurethane.

No effective method has yet been found for coming to terms with the aforementioned problems, despite experiments with a number of different measures of varying complexity.

Thus, attempts have been made to reduce the difficulties, caused by the high friction occurring during e.g. the introduction of a mechanical part into a tight-fitting tube by increasing the size of the tube by e.g. swelling or mechanical dilatation. In addition, fluids, such as alcohol or distilled water, have been used during insertion, the fluids then serving as a kind of "lubricant". Another possibility is to use a tube whose diameter is "too large". However, all these approaches are finicky and have shortcomings.

There is currently no solution to the problem of kinetic friction during the passage of fluids and gases through pipes and tubes. Heparinization, i.e. the addition of the anticoagulant heparin, has been tried in addressing the problem caused by the deposition of platelets. Attempts have also been made to solve the problem of deposits by flushing the pipe or tube. Attempts have been made to solve the problem of diffusion and interaction between the tube wall and a medium or mechanical parts in the internal lumen of the tube by sliding one tube onto another to form e.g. coaxial-type catheters. Thus, there are prior art catheters consisting of an inner polythene tube and an outer silicone tube, the inner polythene tube serving as a barrier to diffusion and the outer silicone tube providing protection against mechanical action.

One effective way of solving all of the aforementioned problems is to treat the surface of the interior of a pipe or tube in some appropriate way. This has hitherto been impossible, quite simply because the interior of long, narrow pipes or tubes has been inaccessible for surface treatment.

The purpose of the present invention is to designate a method making possible treatment of the interior surface of even long, narrow pipes and tubes.

This purpose is achieved with a method for treating the interior surface of a pipe or tube, wherein the pipe or tube wall is incised and folded down so the interior wall of the pipe or tube is exposed for surface treatment, whereupon the wall of the pipe or tube after surface treatment is restored to its original shape when the incision edges are rejoined or wherein the tube is slid onto a core, the wall of the tube then being everted on the core, thereby exposing the interior tube wall for surface treatment, the tube wall then being pulled back so the tube resumes its original shape, and the core is withdrawn from the tube.

In the method according to the invention, the interior of the pipe or tube is exposed to various surface treatments when the wall of the pipe or tube is incised and folded down or when the wall of the pipe or tube is everted on a core in the case of an elastic tube, the pipe or tube wall being returned to its original shape after the surface treatment. In the case of the incised pipe or tube wall, the incision edges are joined together in some appropriate manner. In the case of an everted tube wall, the tube wall is returned to the original tubular shape when the wall is pushed back into its original shape.

Surface treatment can entail transformation of the interior surface of the pipe or tube, a change in the surface material or deposition of some suitable, surface coating. Surface treatment can be completely superficial or consist of some deep surface processing.

The pipe or tube can be cut open along a generatrix or along a spiral path on the wall of the pipe or tube. In the latter instance, the pipe or tube wall is pulled out into a strip or band which receives surface treatment. The strip or band is then being wound in a spiral onto a core with the spiral incision's edges affixed to one another so the shape of the pipe or tube is restored.

According to advantageous embodiments of the method according to the invention, the incision edges are joined together and the joint sealed by gluing, welding or vulcanization of the incision edges. Alternately, an outer tube can be slid onto the treated pipe or the treated tube to hold the incision edges tightly together.

Many different types of surface treatments are possible, depending on the applications in question. According to advantageous embodiments of the method according to the invention, surface treatment can consist of the deposition of layers of suitable material, such as metals, polymers, ceramics or combined layers of different materials. Surface treatment can also consist of the deposition of a layer of medication from which the medication slowly diffuses. Moreover, surface treatment can comprise e.g. vacuum vapor deposition, etching, laser irradiation, plasma treatment, sputtering, ion implantation, ion plating, metallization or deep, mechanical finishing of the interior of the pipe or tube. Treatment can also include one or more of the above treatment methods. The different types of surface treatment produce surfaces with different properties which can, thus, be tailored to the application in question.

The invention will now be additionally illustrated with embodiment examples described with reference to the enclosed drawings in which Fig. 1 shows a relatively long, narrow tube or pipe whose interior surface is to be treated, Figs. 2 and 3 show incision and folding down of the tube or pipe according to a first embodiment of the method according to the invention, Fig. 4 shows the tube or pipe restored to its original shape with a sleeve after surface treatment, Figs. 5 and 6 illustrate a second embodiment example of the method according to the invention in which the incision follows a spiral path on the pipe or tube wall which is then pulled out into a band or strip for surface treatment, and Fig. 7 illustrates an additional embodiment example of the method according to the invention in which the tube wall is everted on a core.

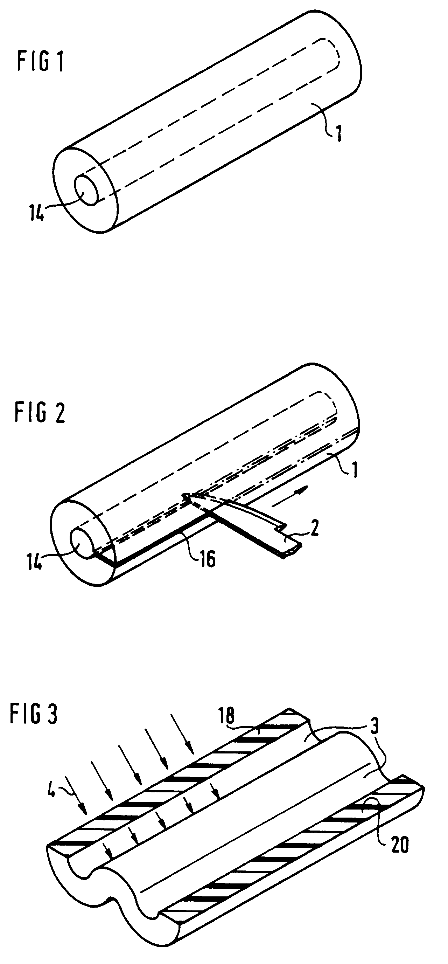

Fig. 1 shows a catheter **1** for medical purposes in the form of a tube with a long, narrow lumen **14** . The catheter **1** consists of an elastic material, made most suitably of a polymer.

Fig. 2 illustrates the way in which the catheter **1** is cut open along a generatrix **16** with an appropriate cutting instrument **2** .

The catheter wall is then folded down so its interior **3** is exposed for suitable surface treatment. See Fig. 3. The arrows **4** schematically illustrate the surface-modification treatment, e.g. in the form of irradiation or spraying. Any other form of surface treatment cited above could also be used.

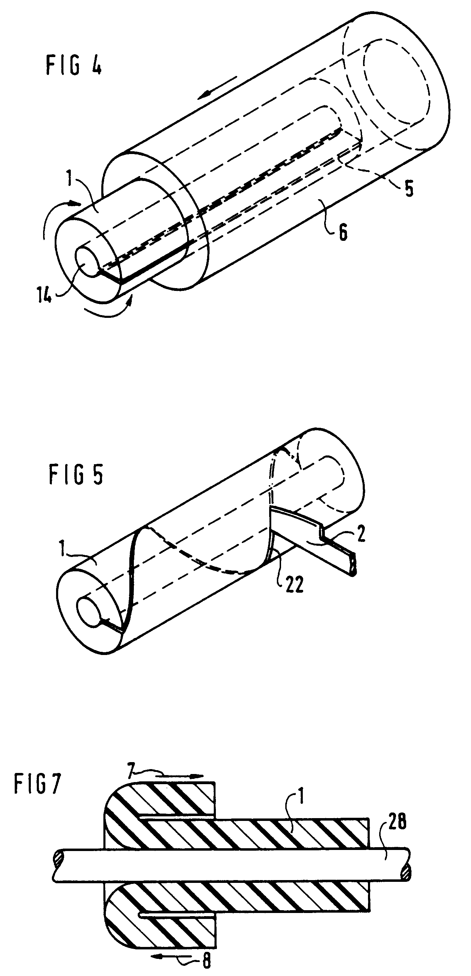

Fig. 4 shows the catheter wall restored to its original shape with the incision edges joined together. The incision edges **18, 20** can then be sealed in some appropriate manner, such as by gluing, welding or vulcanization, to form a non-leaking joint **5** . Fig. 4 shows another way of holding the incised catheter **1** together after the internal surface treatment, i.e. sliding an outer sleeve onto the catheter **1** and e.g. shrinking this outer sleeve **6** onto the catheter **1** . The outer sleeve **6** can appropriately consist of a silicone tube, and shrinking can be achieved by first immersing the outer sleeve **6** in gasoline (petrol) so it swells up, making it easy to slide it onto the catheter **1** . The outer sleeve **6** shrinks around the catheter when the gasoline evaporates. Alternately, shrinking can be achieved if the external sleeve **6** is inflated so it can be slid onto the catheter **1** to hold the incised catheter **1** tightly together.

For the medical applications in question, the catheter can consist of a polythene tube with an internal diameter of 0.3 mm and an external diameter of 0.7 mm. Here, the shrink-fit silicone sleeve typically has an internal diameter of 0.5 mm and an external diameter of 1.5 mm.

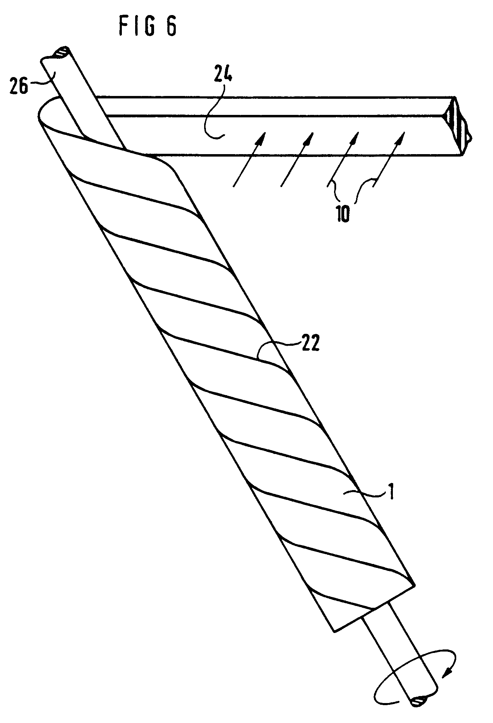

Fig. 5 shows an embodiment example in which the catheter **1** is incised along a spiral path **22** on the catheter wall. The catheter **1** is then mounted on a core **26** . Thus, the catheter wall is cut into a band or strip **24** (see Fig. 6), whereupon the band or strip is partially "pulled off" so the interior, schematically illustrated with the arrows **10** , can be treated. To restore the original catheter shape after the surface treatment, the band or strip **24** is wound in a spiral onto the core **26** , and the spiral incision edges are joined together as described above.

Another embodiment example is illustrated in Fig. 7. In this example, the catheter **1** is also mounted on a core **28** . The catheter wall is everted in the direction shown by the arrow **7** in Fig. 7 so the interior of the catheter **1** is exposed for surface treatment. After the interior surface of the catheter **1** has been treated, the catheter wall is pulled back over the core **28** in the direction shown by the arrow **8** in Fig. 7 so as to restore the catheter's original shape. Finally, the core **28** is removed from the treated catheter **1** .

The embodiments described above apply to medical applications for the administration of drugs and collection of body fluids. However, the method according to the invention can be employed for all kinds of treatment of the interior surface of long, narrow pipes and tubes.

## Claims

1. A method for treating the interior surface of a pipe or tube, wherein the pipe or tube wall is incised and folded down so the interior wall of the pipe or tube is exposed for surface treatment, whereupon the wall of the pipe or tube after surface treatment is restored to its original shape when the incision edges are rejoined.

2. The method of claim **1**, wherein said incision of the pipe or tube is made along a generatrix of the pipe or tube.

3. The method of claim **1**, wherein said incision of the pipe or tube is made along a spiral path in the wall of the pipe or tube.

4. The method of claim **3**, wherein the wall of a pipe or tube is pulled out into a strip or band for treatment of the internal surface, after which treatment the strip or band is wound in a spiral onto a core, and the edges of the spiral incision are joined together to restore the pipe's or tube's original shape.

5. The method of any of the above claims **1 - 4**, wherein the incision edges are glued, welded or vulcanized together following treatment of the internal surface of the pipe or tube wall.

6. The method of any of the above claims **1 - 4**, wherein a sleeve is slid onto the treated pipe or treated tube, after the wall of the pipe or tube has been restored to the original pipe shape or tube shape, so the incision edges are held tightly together.

7. A method for treating the interior surface of an elastic tube, wherein the tube is slid onto a core, the wall of the tube then being everted on the core, thereby exposing the interior tube wall for surface treatment, the tube wall then being pulled back so the tube resumes its original shape, and the core is withdrawn from the tube.

8. A method of any of the claims **1 - 7**, wherein surface treatment comprises the deposition of a layer of some organic or inorganic material.

9. The method of claim **8**, wherein surface treatment comprises the deposition of a layer of metal, polymer or cermet, or a layer of medication or a combined layer of metal, polymer, ceramics and medication, on the interior wall of a pipe or tube.

10. The method of any of the claims **1 - 7**, wherein surface treatment comprises one or more of the following measures: vacuum vapor deposition, etching, laser irradiation, plasma treatment, sputtering, ion implantation, ion plating, metallization or mechanical processing of the interior wall of the pipe or tube.
